# EUROPÄISCHE PATENTSCHRIFT

(11) **EP 3 437 526 B1**
(45) Veröffentlichungstag und Bekanntmachung des Hinweises auf die Patenterteilung: **13.05.2020**
(21) Anmeldenummer: 18182859.1
(22) Anmeldetag: 11.07.2018
(51) Int. Cl.: A47J 31/00, A23F 5/26

(54) **ZUBEREITUNGSVORRICHTUNG UND -VERFAHREN FÜR GETRÄNKE NACH DEM "COLD-BREW"-PRINZIP**
COOKING APPARATUS AND METHOD FOR BEVERAGES ACCORDING TO THE 'COLD BREW' PRINCIPLE
PROCÉDÉ DE PRÉPARATION ET DE TRAITEMENT DES BOISSONS SELON LE PRINCIPE « D'INFUSION À FROID »

(30) Priorität: 04.08.2017 DE 102017213602
(43) Veröffentlichungstag der Anmeldung: 06.02.2019
(73) Patentinhaber: BSH Hausgeräte GmbH, 81739 München (DE)
(72) Erfinder: Ohlhafer, Olaf, 74391 Erligheim (DE); Schneider, Karin, 70442 Stuttgart-Feuerbach (DE)

(56) Entgegenhaltungen:
- DE-U1-202016 005 876
- KR-A- 20160 088 984
- KR-B1- 101 080 708
- US-A1- 2004 251 566
- US-A1- 2007 012 194
- US-A1- 2013 214 436

## Beschreibung

Die Erfindung betrifft ein Zubereitungsgerät, insbesondere für Haushaltszwecke, für durch Elution oder Auslaugen zu erhaltende Getränke, mit einem Zubereitungsbehälter, mit einer Versorgungseinheit zur Aufnahme und Abgabe von Mikroblasen-Wasser stromauf des Zubereitungsbehälters, mit einem Getränkeauslass stromab des Zubereitungsbehälters und mit entsprechenden fluidischen Leitungsverbindungen zwischen diesen Bestandteilen. Außerdem betrifft die Erfindung ein Verfahren zum Herstellen eines durch Elution zu erhaltendes Getränks.

Unter Elution bzw. unter Auslaugen ist in der Anmeldung das Entziehen von bestimmten Bestandteilen eines Stoffes mittels Wasser zu verstehen. Das Ergebnis bildet ein Eluat, das als Getränk oder Getränkebestandteil genießbar ist. Beispiele dafür sind Kaffee oder Tee, wenn sie nicht mit Wasser nahe der Siedetemperatur gebrüht, sondern mit kaltem oder zimmerwarmem Wasser zubereitet werden. Aber auch Gewürze lassen sich auf diese Weise verarbeiten, um hocharomatische Extrakte für die Zubereitung von Speisen und Getränken zu erhalten. Derartige Zubereitungsmethoden sind unter dem Begriff "Cold-Brew-Verfahren" bekannt und erfordern einen beträchtlichen Zeitaufwand. Ein entsprechendes Zubereitungsgerät ist z.B. aus KR 2016 0088984 A bekannt.

Die DE 20 2016 006 367 offenbart ein Zubereitungsgerät für kalte Kaffeegetränke. Es umfasst ein Nahrungsmittelzubereitungsbehältnis zur Aufnahme einer Lebensmittelflüssigkeit, ein Kaffeeextraktreservoir, einen Rührmechanismus, eine Filtereinheit, einen Deckel, ein Schlagmesser und eine Waage. Um dem Anspruch an größtmöglichen Zubereitungskomfort zu entsprechen, kann die Zubereitung in möglichst nur einem Arbeitsschritt vorgenommen werden. Dazu sollen lediglich zu Anfang die für die Zubereitung essentiellen Komponenten in das Zubereitungsbehältnis eingefüllt werden. Sämtliche weitere Arbeitsschritte sollen vollautomatisiert erfolgen können.

US 2013/214436 A1 zeigt ein Zumischen von Mikroblasen zu Wasser in Personenduschen.

Aufgabe der Erfindung ist es, "Cold-Brew-Getränke" in hoher Qualität und kurzer Zeit verfügbar zu machen.

Diese Aufgabe wird bei dem eingangs genannten Zubereitungsgerät erfindungsgemäß dadurch gelöst, dass es eine Einrichtung zum Erzeugen von Mikroblasen-Wasser als Versorgungseinheit aufweist. Erfindungsgemäß kommt also für die Zubereitung des Getränks kein normales Wasser zum Einsatz, sondern ein solches, das Mikroblasen enthält. Die Mikroblasen oder ultrafeinen Luftbläschen beschleunigen den Zubereitungsvorgang, so dass die Einwirkzeit des Wassers auf das auszulaugende Getränkesubstrat deutlich verkürzt werden kann. Die ultrafeinen Bläschen helfen, die Aromastoffe aus den feinen Poren des Getränkesubstrats, beispielsweise aus dem Kaffeemehl, zu lösen. Eine aufwändige Mechanik für eine Rühreinrichtung kann damit ebenso entfallen wie eine lange Wartezeit auf das Getränkeergebnis. Die Einrichtung zum Erzeugen derartigen Mikroblasen-Wassers kann z. B. auf herkömmliches Leitungswasser zurückgreifen, womit das Zubereitungsgerät mit leicht erhältlichem Normalwasser zu befüllen sein kann, was einem Benutzer von herkömmlichen Heißgetränkemaschinen her geläufig ist.

Eine Erzeugungsmöglichkeit für Mikroblasen in herkömmlichem Wasser kann in der Zugabe von druckvorgespanntem Stickstoff bestehen, mit der eine entsprechende Einrichtung per Stickstoffkartuschen ausgerüstet werden kann. Nach einer vorteilhaften Ausgestaltung der Erfindung verfügt das Zubereitungsgerät jedoch über ein mit druckbeaufschlagtem Wasser betriebenes Venturi-Rohr als Einrichtung zum Erzeugen der Mikroblasen. Das Venturi-Rohr wird also mit unter Druck stehendem Wasser durchströmt. Es dient dazu, das Zubereitungswasser möglichst fein mit Luft zu vermischen, so dass die Luft in Blasenform im Wasser enthalten ist. Ähnliche Einrichtungen sind aus dem Heißgetränkebereich bekannt, z. B. als Milchschaumdüsen. Dort lässt sich aufgrund der Fettbestandteile der Milch ein sehr dauerhafter Milchschaum erzeugen. Dieses Prinzip trotz des Fehlens von Fett auf das Schäumen von Wasser zu übertragen, ist daher zumindest überraschend. Es gelingt jedoch nachweislich. Denn beim erfindungsgemäßen Zubereitungsvorgang braucht die Stabilität der Mikroblasen nur von verhältnismäßig kurzer Dauer zu sein, nämlich bis das Mikroblasen-Wasser mit dem Getränkesubstrat in Verbindung kommt.

Das druckbeaufschlagte Wasser lässt sich in herkömmlicher Weise mittels einer Pumpe erzeugen, die in bekannten Heißgetränkezubereitungsgeräten ebenfalls zum Einsatz kommen kann. Mit einer geeigneten Gestaltung und Dimensionierung des Venturi-Rohrs und einer entsprechenden Auslegung der Pumpe gelingt es, im Betrieb des Venturi-Rohrs ausreichend Luft anzusaugen und mit dem Wasser zu vermischen, ohne dass für die Luftzufuhr eine eigene Pumpe erforderlich wäre.

Für den Benutzer des erfindungsgemäßen Zubereitungsgeräts ergibt sich damit eine von herkömmlichen Zubereitungsgeräten her bekannte Bedienung, bei der ein Wasservorratsbehälter zunächst mit Frischwasser zu füllen, ein Getränkesubstrat zuzugeben und der Zubereitungsvorgang zu starten ist. Daraufhin wird das Zubereitungswasser unter Druck durch die Erzeugungseinrichtung für Mikroblasen geleitet, wo es per Unterdruck Luft ansaugt und mit ihr vermischt wird. Daraufhin wird das Mikroblasen-Wasser unmittelbar mit dem Getränkesubstrat in innigen Kontakt gebracht. Daraufhin löst das Wasser aufgrund seiner Lösungsmitteleigenschaft und unterstützt durch die ultrafeinen Bläschen die Aromastoffe aus dem Getränkesubstrat heraus. Anschließend gelangt das Eluat in einen Getränkeauslass, wo es in ein bereitgestelltes Getränkegefäß abgegeben wird. Als Servicetätigkeit bleibt dem Benutzer wie bei bekannten Zubereitungseinrichtungen das Entfernen des ausgelaugten Getränkesubstrats und ggf. das Nachfüllen von Frischwasser.

Nach einer weiteren vorteilhaften Ausgestaltungsform der Erfindung kann das Zubereitungsgerät über einen Mikro-Blasengenerator als Versorgungseinrichtung mit einem axialen bzw. in Strömungsrichtung verlaufenden Wasserkanal und einer ersten Drossel stromauf einer vorzugsweise tangentialen Luftzufuhr in den Wasserkanal verfügen. Das druckbeaufschlagte und strömende Wasser im axialen Wasserkanal baut stromab der Drossel einen Unterdruck auf, der die Luft ansaugt. Schon dadurch wird die Luft in kleinen Blasen im strömenden Wasser mitgerissen und verteilt. Eine tangentiale Luftzufuhr kann das Einströmen und Vermischen mit dem Wasser noch verbessern und kleinere Blasen erzeugen.

Nach einer weiteren vorteilhaften Ausgestaltungsform der Erfindung kann das Zubereitungsgerät stromab der Luftzufuhr über eine zweite Drossel verfügen. Dadurch lassen sich große Blasen in kleinere umwandeln bzw. zerteilen. Je kleiner und feiner die Bläschen im Wasser sind, umso wirkungsvoller unterstützen sie das Auslaugen des Getränkesubstrats.

Erfindungsgemäß kann also die Zubereitungszeit von "Cold-Brew-Getränken" durch den Einsatz von Mikroblasen-Wasser erheblich verkürzt werden. Erfindungsgemäß verfügt das Zubereitungsgerät zusätzlich über einen Druckerzeuger zum Einleiten des Mikroblasen-Wassers aus der Versorgungseinrichtung unter Druck in den Zubereitungsbehälter. Kommt die bisherige Pumpe als Druckerzeuger zum Einsatz, so ist sie so stark ausgelegt, dass sie nicht nur die Versorgungseinheit zum Erzeugen von Mikroblasen-Wasser betreibt, sondern auch noch das erzeugte Mikroblasen-Wasser unter Druck in den Zubereitungsbehälter einleiten kann. Der Zubereitungsbehälter lässt sich dafür druckdicht verschließen. Mit der Anordnung eines ggf. zusätzlichen Druckerzeugers steht das Zubereitungswasser nicht nur unter dem hilfreichen Einfluss von Mikroblasen, sondern zusätzlich unter Überdruck. Auch er, der Überdruck, beschleunigt das Extraktionsverfahren, womit sowohl das Prinzip der Mikroblasen als auch das Prinzip des Überdrucks zur Elution bzw. zum Auslaugen des Getränkesubstrats in der erfindungsgemäßen Zubereitungseinrichtung genutzt wird. Beide Prinzipien zusammen führen nicht nur zu einer erheblichen Verkürzung der Zubereitungsdauer, sondern auch zu einem wirkungsvollen und effektiven Eluieren bzw. Auslaugen des Getränkesubstrats. Damit bietet sich ein Optimum zur Reduktion der Zubereitungsdauer von "Cold-Brew-Getränken".

Bei Einsatz der Pumpe für den Mikroblasengenerator und einer Druckeinleitung des Mikroblasen-Wassers in den Zubereitungsbehälter kann eine pneumatische Pumpe für die Luftzufuhr erforderlich werden. An sich hilft der unter Druck stehende Wasserstrom im Mikro-Blasengenerator, die Luft anzusaugen. Ggf. kann aber ein gewisser Luftdruck in der Luftzufuhr erforderlich werden.

Nach einer weiteren vorteilhaften Ausgestaltung der Erfindung kann das Zubereitungsgerät ein Bohnenmahlwerk stromauf und/oder einen Filter stromab des Zubereitungsbehälters aufweisen. Ein Filter oder Sieb stromab des Zubereitungsbehälters oder an seinem Boden oder als sein Boden ermöglicht eine quasi lineare Zubereitung des Getränks, indem das Zubereitungswasser an einer Oberseite des Zubereitungsbehälters eingefüllt und an seiner Unterseite ein fertiges Getränk entnommen werden kann. Auch bei groben oder zerkleinerten Teeblättern, erst recht aber bei gemahlenem Kaffee, hilft das Filter oder Sieb zum Trennen des eluierten Getränkesubstrats vom gewünschten Getränk. Es erleichtert folglich die Bedienung des Zubereitungsgeräts erheblich, zudem in einer Weise, wie es dem Benutzer von bekannten Zubereitungsgeräten her geläufig ist.

Das Bohnenmahlwerk stromauf des Zubereitungsbehälters und seine Bedienung ist dem Benutzer ebenfalls bekannt, womit es keine Bedienungsschwierigkeit darstellt, sondern den Komfort des Zubereitungsgeräts steigert. Denn nicht für jede Getränkeportion muss separat ein Getränkesubstrat zugeführt werden, sondern kann automatisch, aber dennoch frisch zubereitet werden.

Nach einer weiteren vorteilhaften Ausgestaltung der Erfindung kann das Zubereitungsgerät stromab des Zubereitungsbehälters über eine fluidische Weiche verfügen, beispielsweise in der Form eines Drei-Wegeventils, die bzw. das den Zubereitungsbehälter mit Fluidleitungen zum Getränkeauslass einerseits und in die Versorgungseinrichtung andererseits verbindet. Die Verbindung mit dem Getränkeauslass dient der Abgabe des Getränks in ein Getränkegefäß. Die andere Fluidleitung zurück in die Versorgungseinrichtung erlaubt den erneuten Durchlauf des bereits erhaltenen Getränks durch die Versorgungseinrichtung und den Zubereitungsbehälter. Nun wird nicht Zubereitungswasser in die Versorgungseinheit geleitet und ggf. dem Mikro-Blasengenerator unterworfen, sondern bereits das Eluat. Mit Mikroblasen versetzt gelangt es ein weiteres Mal in den Zubereitungsbehälter und sorgt dort für die bestimmungsgemäße Aufnahme weiterer Aromen. Dadurch kann das Getränk geschmacklich intensiviert werden, womit es eine Variation der Zubereitung bietet, die in herkömmlichen Zubereitungsgeräten unbekannt ist.

Nach einer weiteren vorteilhaften Ausgestaltung der Erfindung kann das Zubereitungsgerät ein Crema-Ventil oder Blasengenerator am Getränkeauslass bzw. stromauf des Getränkeauslasses verfügen. Damit lässt sich ein feiner Schaum mit Hilfe von Mikrobläschen auf dem Getränk erzeugen, der sehr stabil ist und stark an eine Crema eines guten Espresso erinnert. Er vermittelt insbesondere bei kaffeebasierten Getränken einen von Heißgetränken her bekannten Eindruck von Frische. Einen geeigneter Blasengenerator beschreibt die Anmeldung mit der Anmeldernummer 201701528 vom selben Anmelder und vom selben Tage, der hiermit auch zum Gegenstand der vorliegenden Anmeldung gemacht wird.

Die eingangs genannte Aufgabe wird außerdem durch ein Verfahren zum Herstellen eines durch Elution zu erhaltendes Getränks gelöst mit den folgenden Schritten:
a) Beaufschlagen von Zubereitungswasser mit Druck,
b) Zuführen von Luft zum druckbeaufschlagten Zubereitungswasser zum Bilden von Mikroblasen,
c) Einleiten des durch Schritt b) erhaltenen Mikroblasen-Wassers in einen Zubereitungsbehälter,
d) Auslaugen eines Getränkesubstrats im Zubereitungsbehälter unter der Einwirkung des Mikroblasen-Wassers,
e) Abgabe des fertigen Getränks in ein Getränkegefäß.

Erfindungsgemäß wird also herkömmlich verwendetes Zubereitungswasser, beispielsweise Trinkwasser aus einer Hauswasserinstallation, im Schritt a) mit Druck beaufschlagt. Nachdem das Zubereitungswasser mit Druck versetzt wurde, wird ihm in Schritt b) Umgebungsluft zugeführt, sodass sich im Zubereitungswasser Mikroblasen bilden. Durch die Luftzufuhr lässt sich also das druckbeaufschlagte Zubereitungswasser zu Mikroblasen-Wasser umwandeln. Das erfindungsgemäße Verfahren stützt sich also auf allgemein leicht erhältliches Trinkwasser, das Benutzer auch für herkömmliche Heißgetränkezubereitungsgeräte verwenden können. Mit der geräteinternen Druckquelle entfällt für den Benutzer das Vorhalten und Einsetzen beispielsweise von Druckpatronen oder dergleichen, die ohnehin bei manchen Benutzern auf Ablehnung stoßen. Anschließend wird das Mikroblasen-Wasser im Schritt c) in einen Zubereitungsbehälter eingeleitet, in den vorher bereits auszulaugendes Getränkesubstrat eingebracht wurde. Bei dem Getränkesubstrat kann es sich beispielsweise um gemahlenen Kaffee, um Teeblätter oder auch um Gewürzblätter oder dergleichen handeln, die eluiert werden sollen. Das Getränkesubstrat wird in einem anschließenden Schritt d) der Einwirkung des Mikroblasen-Wassers ausgesetzt, sodass das Wasser als Lösungsmittel und mit Unterstützung der Mikroblasen bzw. der "ultrafine bubbles" die Aromastoffe aus dem Getränkesubstrat lösen. Die Mikro-Blasen steigern die Effizienz des Auslaugeprozesses derart, dass die Einwirkzeit des Zubereitungswassers auf das Getränkesubstrat erheblich reduziert werden kann. Nach Abschluss der Elution kann das Eluat als fertiges Getränk oder als Bestandteil eines Getränks in ein bereitgestelltes Gefäß abgegeben werden.

Erfindungsgemäß wird das Mikroblasen-Wasser vor dem Schritt c) seinerseits unter Druck gesetzt, sodass das Auslaugen in Schritt c) sowohl unter Einwirkung des Mikroblasen-Wassers an sich, als auch unter seinem Druck erfolgt. Die Einwirkung von Druck beschleunigt das Auslaugen zusätzlich, sodass sie zu einer weiteren erheblichen Verfahrensverkürzung führt. Vorteilhafterweise muss das zubereitete Mikroblasen-Wasser nicht zusätzlich unter Druck gesetzt werden, sondern kann im Schritt a) bereits soweit druckbeaufschlagt sein, dass es nach Zufuhr von Luft im Schritt b) noch über einen ausreichenden Druck für eine druckbeaufschlagte Elution in Schritt c) zur Verfügung steht.

Die eingangs genannte Aufgabe lässt sich außerdem durch die Verwendung von druckbeaufschlagtem Wasser einerseits und mit Mikroblasen versetztem Zubereitungswasser andererseits zur Herstellung eines durch Elution zu gewinnenden Kaffees oder Tees lösen.

Das Prinzip der Erfindung wird im Folgenden anhand einer Zeichnung beispielshalber noch näher erläutert. In der Zeichnung zeigen:
- Figur 1:: Einen schematischen Aufbau einer erfindungsgemäßen Kaffeemaschine,
- Figur 2:: Einen schematischen Aufbau eines Blasengenerators.

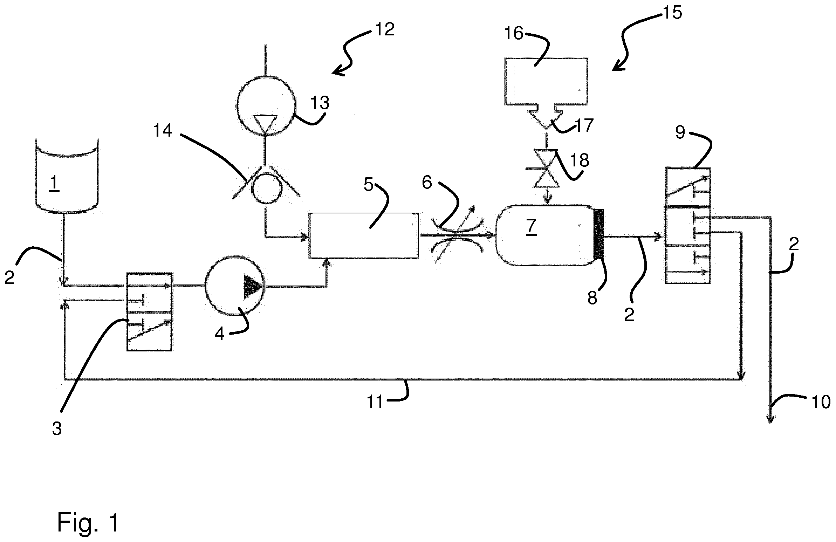

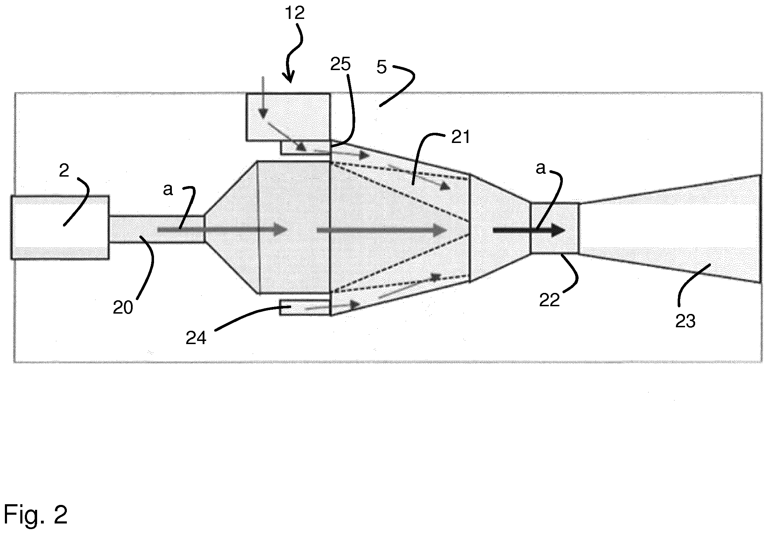

Prinzipiell umfasst eine Kaffeemaschine als erfindungsgemäße Zubereitungseinrichtung gemäß Figur 1 einen Frischwasserbehälter 1, in dem sich Zubereitungswasser bevorraten lässt. Eine Fluidleitung 2 verbindet ihn über ein zwischengeschaltetes und später näher erläutertes oberes Mehrwegeventil 3 mit einer Pumpe 4, die das Zubereitungswasser aus dem Behälter 1 unter Druck setzt. Im Betrieb gelangt das Frischwasser unter Druck in einen Mikroblasengenerator 5, der in Figur 2 näher beschrieben wird. Stromab des Mikroblasengenerators 5 befindet sich ein einstellbares Drosselventil 6, das anschließend in einen druckdicht verschließbaren Zubereitungsbehälter 7 mündet. An ihn schließt sich stromab ein Filter 8 an, der fluidisch mit einem weiteren Mehrwegeventil 9 verbunden ist. Das untere Mehrwegeventil 9 führt zu einer Getränkeausgabe 10. Parallel dazu führt ein Rücklauf 11 in das obere Mehrwegeventil 3. Damit erlaubt das obere Mehrwegeventil 3 einen fluidischen Zugang zur Pumpe 4 entweder vom Frischwasserbehälter 1 aus oder vom unteren Mehrwegeventil 9 aus.

In den Mikroblasengenerator 5 mündet außerdem eine Luftluftzufuhr 12, die Umgebungsluft mittels einer pneumatischen Pumpe 13 und einem nachgeschalteten Rückschlagventil 14 in den Mikroblasengenerator 5 leitet. Die Pumpe 13 wirkt also wie ein Verdichter oder Kompressor.

Stromauf seines Filters 8 mündet eine Substratzufuhr 15 im Zubereitungsbehälter 7, die einen Kaffeebohnenbehälter 16 aufweist, dem ein Mahlwerk 17 und ein druckstabiles Absperrventil 18 nachgeschaltet sind, und mit der sich frisch gemahlenes Kaffeemehl in den Zubereitungsbehälter 7 fördern lässt.

Zur Zubereitung eines Cold-Brew-Kaffees wird zunächst eine entsprechende Menge an Kaffeebohnen aus dem Bohnenbehälter 16 im Mahlwerk 17 gemahlen und über das Absperrventil 18 in den Zubereitungsbehälter 7 abgegeben. Anschließend wir der Zubereitungsbehälter 7 über das Absperrventil 18 von der Substratzufuhr 15 druckdicht abgetrennt.

Dann pumpt die Pumpe 4 eine entsprechende Menge Zubereitungswassers zum Mikroblasengenerator 5. Die Pumpe 4 sorgt außer für den Transport auch für einen gewissen Überdruck im Zubereitungswasser und somit zu einem Überdruck im späteren Zubereitungsvorgang. Das Zubereitungswasser wird im Mikro-Blasengenerator 5 mit Luft vermischt. Dazu wird die Umgebungsluft über die Pumpe 13 angesaugt, gefiltert und über das Rückschlagventil 14 in den Mikroblasengenerator 5 eingeleitet. Dort wird aus dem druckbeaufschlagten Zubereitungswasser und der zugeführten Luft ein Gemisch aus Wasser und Luftbläschen, dem Mikroblasen-Wasser erzeugt. Es gelangt über das Drosselventil 6 in den Zubereitungsbehälter 7. Im Drosselventil 6 werden die größeren Bläschen durch Scherung in kleinere Bläschen umgewandelt. Die Einstellbarkeit des Drosselventils 6 erlaubt eine Anpassung der Bläschengröße und -verteilung in Abhängigkeit von der gewählten Getränkeart.

Ist eine erforderliche Menge an Mikroblasen-Wasser im Zubereitungsbehälter 7 eingefüllt, wird das Drosselventil 6 druckdicht geschlossen, sodass der Zubereitungsbehälter 7 eine druckdicht geschlossene Kammer darstellt. Nachdem das Mikroblasen-Wasser eine bestimmte Zeit auf das Kaffeepulver einwirken konnte, hat es unter Auflösen der Mikroblasen Aromen gelöst und sich zu Eluat gewandelt. Das Eluat wird über den Filter 8 in das schaltbare untere Mehrwegeventil 9 und von dort entweder erneut zum Mikroblasengenerator 5 gepumpt oder dem Getränkeauslass 10 zugeführt.

Die Möglichkeit, das Eluat aus dem Zubereitungsbehälter 7 ein weiteres Mal über den Mikroblasengenerator 5 zum Zubereitungsbehälter 7 zu führen, bietet eine Möglichkeit, die Zusammensetzung, hauptsächlich die Konzentration des Aromas und der Geschmacksstoffe, zu optimieren. Einen weiteren Einfluss auf das Zubereitungsergebnis hat die Temperatur des Zubereitungswassers, das im Normalfall Zimmertemperatur aufweist, aber auch leicht gekühlt oder erwärmt sein kann. Die Temperatur und der Druck stellen neben dem Mischungsverhältnis von Kaffee und Zubereitungswasser, dem Mahlgrad des Kaffeemehls und der Einwirkungsdauer des Mikroblasen-Wassers auf das Kaffeemehl wesentliche Parameter zum Variieren des Kaffeegeschmacks dar.

Figur 2 zeigt einen schematischen Aufbau des Mikro-Blasengenerators 5 gemäß Figur 1: Demnach schließt er in Strömungsrichtung a des Zubereitungswassers an eine fluidische Leitung 2 an, an die er mit einer ersten Drossel 20 ankoppelt. Seine erste Drossel 20 weist einen deutlich geringeren Querschnitt auf als die Leitung 2, erweitert sich dann aber zügig konisch in eine zylindrische Mischkammer 21, die einen mindestens dreifachen Durchmesser aufweist. Anschließend verjüngt sich die Mischkammer 21 in Strömungsrichtung a konisch hin zu einer zweiten Drossel 22, die etwa den doppelten Durchmesser der ersten Drossel 20 aufweist. An sie schließt ein sich langsam erweiternder Trichter 23 an, der entweder in eine weitere Fluidleitung 2 oder unmittelbar in den Zubereitungsbehälter 7 mündet.

Die Mischkammer 21 umzieht ein Ringkanal 24, der sich konzentrisch um die Mischkammer 21 legt und mit einem ringförmigen Spalt 25 in ihr mündet. Der Ringkanal 25 ist Teil der Luftzufuhr 12 und wird aus der Pumpe 13 gemäß Figur 1 mit Luft gespeist.

Im Betrieb wird das Zubereitungswasser durch die erste Drossel 20 hindurch und zentral in die Mischkammer 21 geführt. Die für die Mikro-Blasen erforderliche Luft strömt radial über den Ringkanal 24 bzw. in Ringspalt 25 in die Mischkammer 21 ein und vermischt sich dort von dem gesamten Innenumfang der Mischkammer 21 ausgehend mit dem Zubereitungswasser. Wird die Luft über eine tangentiale Komponente bei der Einströmung verdrallt, vermischt sie sich noch effektiver mit dem Zubereitungswasser. Das Luft-Wasser-Gemisch besteht aus einer Vielzahl feiner Blasen, das durch die zweite Drossel 22 strömt. In ihr lassen sich noch relativ große Luftbläschen zu Mikroblasen umwandeln. Der Venturieffekt des druckbeauflagten Zubereitungswassers an sich saugt Luft analog einer Wasserstrahlpumpe an, sodass die Pumpe 13 entweder entfallen kann oder zumindest keinen großen Luftdruck erzeugen muss.

Da es sich bei der vorhergehenden, detailliert beschriebenen Kaffeemaschine um ein Ausführungsbeispiel handelt, kann sie in üblicher Weise vom Fachmann in einem weiten Umfang modifiziert werden, ohne den Bereich der Erfindung zu verlassen. Insbesondere können auch die konkreten Ausgestaltungen der Substratzufuhr in anderer Form als in der hier beschriebenen erfolgen oder entfallen. Ebenso kann der Mikroblasengenerator in einer anderen Form ausgestaltet werden, wenn dies aus Platzgründen bzw. designerischen Gründen notwendig ist. Weiter schließt die Verwendung der unbestimmten Artikel "ein" bzw. "eine" nicht aus, dass die betreffenden Merkmale auch mehrfach vorhanden sein können.

### Bezugszeichenliste

- 1: Frischwasserbehälter
- 2: fluidische Leitungsverbindung
- 3: oberes Mehrwegeventil
- 4: (Wasser-)Pumpe
- 5: Mikroblasengenerator
- 6: Drosselventil
- 7: Zubereitungsbehälter
- 8: Filter
- 9: unteres Mehrwegeventil
- 10: Getränkeausgabe
- 11: Rücklauf
- 12: Luftzufuhr
- 13: (Luft-)Pumpe
- 14: Rückschlagventil
- 15: Substratzufuhr
- 16: Bohnenbehälter
- 17: Mahlwerk
- 18: Absperrventil
- 20: erste Drossel
- 21: Mischkammer
- 22: zweite Drossel
- 23: Trichter
- 24: Ringkanal
- 25: Ringspalt

- a: Strömungsrichtung

## Patentansprüche

1. Zubereitungsgerät für durch Elution zu erhaltende Getränke, insbesondere für Haushaltszwecke, mit einem Zubereitungsbehälter (7), mit einer Versorgungseinheit (5) zur Abgabe von Mikro-Blasen-Wasser stromauf des Zubereitungsbehälters (7), mit einem Getränkeauslass (10) stromab des Zubereitungsbehälters (7) und einer Einrichtung (5) zum Erzeugen von Mikroblasen-Wasser als Versorgungseinheit, **gekennzeichnet durch** einen Druckerzeuger (4) zum Einleiten von druckbeaufschlagtem Mikroblasen-Wasser aus der Versorgungseinrichtung (5) in den Zubereitungsbehälter (7).

2. Zubereitungsgerät nach Anspruch 1, **gekennzeichnet durch** ein mit druckbeaufschlagtem Wasser betriebenes Venturi-Rohr (20,21) als Einrichtung zum Erzeugen von Mikro-Blasen.

3. Zubereitungsgerät nach Anspruch 2, **gekennzeichnet durch** einen Mikroblasengenerator (5) als Versorgungseinrichtung mit einem axialen Wasserkanal, einer ersten Drossel (20) stromauf einer vorzugsweise tangentialen Luftzufuhr (12) in den Wasserkanal.

4. Zubereitungsgerät nach Anspruch 3, gekennzeichnet eine zweite Drossel (22) stromab der Luftzufuhr (12).

5. Zubereitungsgerät nach einem der obigen Ansprüche, **gekennzeichnet durch** ein Bohnen-Mahlwerk (17) stromauf und/oder einen Filter (8) stromab des Zubereitungsbehälters (7).

6. Zubereitungsgerät nach einem der obigen Ansprüche, **gekennzeichnet durch** ein Drei-Wege-Ventil (9) stromab des Zubereitungsbehälters (7) mit Fluidleitungen (11) in die Versorgungseinheit (5) und zum Getränkeauslass (10).

7. Zubereitungsgerät nach einem der obigen Ansprüche, **gekennzeichnet durch** ein Cremaventil am Getränkeauslass (10).

8. Verfahren zum Herstellen eines durch Elution zu erhaltendes Getränks, mit den folgenden Schritten:
a) Beaufschlagen von Zubereitungswasser mit Druck,
b) Zuführen von Luft zum druckbeaufschlagten Zubereitungswasser zum Bilden von Mikroblasen im Zubereitungswasser,
c) Einleiten des durch Schritt b) erhaltenen Mikroblasen-Wassers in einen Zubereitungsbehälter,
d) Auslaugen eines Getränkesubstrats im Zubereitungsbehälter unter der Einwirkung des Mikroblasen-Wassers,
**dadurch gekennzeichnet, dass** das Mikroblasen-Wasser vor dem Schritt d) unter Druck gesetzt wird, so dass das Auslaugen in Schritt d) sowohl unter der Einwirkung des Mikroblasen-Wassers als auch unter Druck erfolgt.

## Claims

1. Preparation device for beverages to be obtained by means of elution, in particular for household purposes, with a preparation container (7), with a supply unit (5) for transferring microbubble water upstream of the preparation container (7), with a beverage outlet (10) downstream of the preparation container (7) and a device (5) for generating microbubble water as a supply unit, **characterised by** a pressure generator (4) for introducing pressurised microbubble water from the supply device (5) into the preparation container (7).

2. Preparation device according to claim 1, **characterised by** a Venturi tube (20, 21) operated with pressurised water as a device for generating microbubbles.

3. Preparation device according to claim 2, **characterised by** a microbubble generator (5) as a supply device with an axial water duct, a first throttle (20) upstream of a preferably tangential air supply (12) into the water duct.

4. Preparation device according to claim 3, characterised a second throttle (22) downstream of the air supply (12).

5. Preparation device according to one of the above claims, **characterised by** a bean grinder (17) upstream of and/or a filter (8) downstream of the preparation container (7).

6. Preparation device according to one of the above claims, **characterised by** a three-way valve (9) downstream of the preparation container (7) with fluid lines (11) into the supply unit (5) and to the beverage outlet (10).

7. Preparation device according to one of the above claims, **characterised by** a crema valve at the beverage outlet (10).

8. Method for producing a beverage to be obtained by means of elution, having the following steps:
a) applying pressure to the preparation water,
b) supplying air to the pressurised preparation water in order to form microbubbles in the preparation water,
c) introducing the microbubble water obtained by step b) into a preparation container,
d) extracting a beverage substrate in the preparation container under the effect of the microbubble water,
**characterised in that** the microbubble water is pressurised before step d), so that the extraction in step d) is carried out both under the effect of the microbubble water and also under pressure.

## Revendications

1. Appareil de préparation pour boissons qu'on obtient par élution, en particulier à buts ménagers, avec un récipient de préparation (7), avec une unité d'alimentation (5) pour l'émission d'eau avec microbulles en amont du récipient de préparation (7), avec une sortie pour boisson (10) en aval du récipient de préparation (7) et un dispositif (5) de production d'eau avec microbulles comme unité d'alimentation, **caractérisé par** un producteur de pression (4) pour l'arrivée d'eau avec microbulles et pression hors du dispositif d'alimentation (5) dans le récipient de préparation (7).

2. Appareil de préparation selon la revendication 1, **caractérisé par** un tube de Venturi (20, 21) fonctionnant avec de l'eau avec pression comme dispositif de production de microbulles.

3. Appareil de préparation selon la revendication 2, **caractérisé par** un générateur de microbulles (5) comme dispositif d'alimentation avec un canal d'eau axial, un premier étranglement (20) en amont d'une amenée d'air (12) de préférence tangentielle, dans le canal d'eau.

4. Appareil de préparation selon la revendication 3, **caractérisé par** un deuxième étranglement (22) en aval de l'amenée d'air (12).

5. Appareil de préparation selon l'une des revendications précédentes, **caractérisé par** un broyeur de grains (17) en amont et/ou un filtre (8) en aval du récipient de préparation (7).

6. Appareil de préparation selon l'une des revendications précédentes, **caractérisé par** une vanne trois voies (9) en aval du récipient de préparation (7) avec des conduites pour liquides (11) allant dans l'unité d'alimentation (5) et vers la sortie pour boisson (10).

7. Appareil de préparation selon l'une des revendications précédentes, **caractérisé par** une vanne à crème sur la sortie pour boisson (10).

8. Procédé de fabrication d'une boisson qu'on obtient par élution, comprenant les étapes suivantes:
a) injection d'eau de préparation avec pression,
b) amenée d'air vers l'eau de préparation avec pression pour la formation de microbulles dans l'eau de préparation,
c) conduite de l'eau avec microbulles obtenue à l'étape b) dans un récipient de préparation,
d) lessivage d'un substrat de boisson dans le récipient de préparation sous opération de l'eau avec microbulles,
**caractérisé en ce que** l'eau avec microbulles est mise sous pression avant l'étape d) de sorte que le lessivage à l'étape d) soit effectué autant sous opération de l'eau avec microbulles que sous la pression.
